(19) Europäisches Patentamt
European Patent Office
Office européen des brevets

(11) **EP 4 494 731 A1**

(12) **EUROPEAN PATENT APPLICATION**
published in accordance with Art. 153(4) EPC

(43) Date of publication:
**22.01.2025 Bulletin 2025/04**

(21) Application number: **22932167.4**

(22) Date of filing: **18.03.2022**

(51) International Patent Classification (IPC):
**B01D 39/00** (2006.01)        **B01D 39/16** (2006.01)
**B01D 39/20** (2006.01)        **C08J 9/40** (2006.01)

(52) Cooperative Patent Classification (CPC):
**B01D 39/00; B01D 39/16; B01D 39/20; C08J 9/40**

(86) International application number:
**PCT/JP2022/012608**

(87) International publication number:
**WO 2023/175894 (21.09.2023 Gazette 2023/38)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Hokuetsu Corporation
Nagaoka-shi
Niigata 940-0027 (JP)**

(72) Inventors:
• **FUKUSHIMA, Shota
  Nagaoka-shi, Niigata 940-0027 (JP)**
• **NEMOTO, Junji
  Nagaoka-shi, Niigata 940-0027 (JP)**
• **TAMURA, Atsushi
  Nagaoka-shi, Niigata 940-0027 (JP)**

(74) Representative: **v. Bezold & Partner
Patentanwälte - PartG mbB
Ridlerstraße 57
80339 München (DE)**

(54) **AIR-FILTER FILTER MATERIAL AND METHOD FOR PRODUCING FILTER MATERIAL**

(57)    An object of the present disclosure is to provide an air-filter filter material in which filter performance is improved and good water repellency is obtained by using polyvinyl alcohol, a cationic surfactant, and a water repellent and equipping pores of fluid permeation paths of a support with a mesh-like network of polyvinyl alcohol. A method for producing an air-filter filter material according to the present disclosure includes: an adhesion step of adhering a polyvinyl alcohol aqueous solution to a support, having fluid permeability, and bringing the support into a wet state; and a drying step of drying the polyvinyl alcohol aqueous solution adhered to the support in a wet state at 140°C or higher; in the method, the polyvinyl alcohol aqueous solution contains a cationic surfactant and a water repellent and is free of binder resins other than polyvinyl alcohol, and pores, serving as fluid permeation paths, of the support is, by the polyvinyl alcohol aqueous solution being dried after completion of the drying step, equipped with a mesh-like network of polyvinyl alcohol.

Fig. 1

3.0kV 8.1mm x10.0k SE(UL) 2022/02/22 15:11        5.00um

# EP 4 494 731 A1

## Description

### Technical Field

An object of the present disclosure is to provide an air-filter filter material which significantly improves particle collection performance using polyvinyl alcohol, and a method for producing the filter material. More specifically, the present disclosure provides a method for producing, in a relatively short time, an air-filter filter material suitable for air purification uses in clean rooms or clean benches for semiconductors, liquid crystals, or bio/food industries, building air conditioning, internal combustion engines, indoor spaces, etc.

### Background Art

An air-filter filter material is generally used to collect submicron- to micron-sized particles in the air. The air-filter filter material is, depending on its collection performance, roughly classified into a filter material for a coarse dust filter, a filter material for a medium efficiency particulate air filter, and a filter material for a HEPA (high efficiency particulate air) filter or a filter material for an ULPA (ultra low penetration air) filter. As basic characteristics of these air-filter filter materials, in addition to low particle permeability of fine dust particles, low pressure loss is required in order to allow air to pass through the filter.

As an air-filter filter material, there is a proposal to increase filter performance by means of hydrophobizing the surface of glass fiber by using polyvinyl alcohol having a degree of partial saponification of up to 90%, and thus improving dispersibility of fiber (for example, see Patent Literature 1).

Further, as a nonwoven fabric filter, there is a proposal to have high shape retainability that is less likely to collapse in the thickness direction even upon application of wind pressure, by means of forming minute fiber of polyvinyl alcohol oriented in the thickness direction (for example, see Patent Literature 2).

### Citation List

#### Patent Literature

Patent Literature 1: JP 2008-194584 A
Patent Literature 2: WO 2018/221063 A1

### Summary of Invention

#### Technical Problem

In Patent Literature 1, a fluorine-based water repellent is contained in a binder liquid, and therefore the obtained filter material has water repellency. However, although polyvinyl alcohol is contained as one of the binder resins for binding glass fibers, the filter material in a wet state is not rapidly dried, where the polyvinyl alcohol plays a role in enhancement of dispersibility of glass fibers but a different mixed binder resin inhibits formation of a mesh-like network of polyvinyl alcohol between fibers, and a structure having a network is not obtained. Therefore, there is a possibility of difficulty in both obtaining good efficiency of collecting finer particles and having water repellency. In Patent Literature 1, although PF values for target particle sizes of 0.30 to 0.40 $\mu$m are shown, the PF value under a severer condition where the target particle size is set to 0.10 to 0.15 $\mu$m is a low value. Thus, an air-filter filter material having a high PF value under a severe condition where the target particle size is 0.10 to 0.15 $\mu$m is demanded. Further, in Patent Literature 1, water repellency is obtained, and this water repellency is imparted by impregnating the air-filter filter material with about 0.25% of a water repellent and adhering a large amount of the water repellent. However, an air-filter filter material that exhibits water repellency by addition of a very small amount of a water repellent is demanded.

In Patent Literature 2, the amount of minute fiber of polyvinyl alcohol formed in directions other than the thickness direction is small, and therefore the minute fiber does not always contribute to an increase in filter performance.

An object of the present disclosure is to provide an air-filter filter material in which filter performance, particularly particle collection performance, is improved and good water repellency is obtained by using polyvinyl alcohol, a cationic surfactant, and a water repellent and equipping pores as fluid permeation paths of a support with a mesh-like network of polyvinyl alcohol relatively randomly in the planar direction and the thickness direction of the support. Another object of the present disclosure is to provide a method for producing such an air-filter filter material in a relatively short time.

2

Solution to Problem

The present inventors have found that a polyvinyl alcohol aqueous solution, for being adhered to a support having fluid permeability, containing a fluorine-based water repellent brings about water repellency, but brings about the PF value much less than a polyvinyl alcohol aqueous solution free of a fluorine-based water repellent, the reason of which is not clear, and, contrastingly, a polyvinyl alcohol aqueous solution containing both a cationic surfactant and a fluorine-based water repellent brings about a high PF value as well as water repellency, and thereby have solved the above issue. That is, a method for producing an air-filter filter material according to the present invention is a method including: an adhesion step of adhering a polyvinyl alcohol aqueous solution to a support, having fluid permeability, and bringing the support into a wet state; and a drying step of drying the polyvinyl alcohol aqueous solution adhered to the support in a wet state at 140°C or higher, in which the polyvinyl alcohol aqueous solution contains a cationic surfactant and a water repellent and is free of binder resins other than polyvinyl alcohol, and pores, serving as fluid permeation paths, of the support is, by the polyvinyl alcohol aqueous solution being dried after completion of the drying step, equipped with a mesh-like network of polyvinyl alcohol.

In the method for producing the air-filter filter material according to the present invention, the mesh-like network is preferably formed of nanofiber. Both high particle collection performance and low pressure loss can be achieved.

In the method for producing the air-filter filter material according to the present invention, the nanofiber is preferably nanofiber having a number average fiber diameter of 10 to 500 nm. Both higher particle collection performance and low pressure loss can be achieved.

In the method for producing the air-filter filter material according to the present invention, an amount of the polyvinyl alcohol aqueous solution for being adhered to the support is preferably 50 g or more per square meter of support. A mesh-like network is easily formed in a proper quantity in pores serving as fluid permeation paths of the support, and the PF value is easily increased.

In the method for producing the air-filter filter material according to the present invention, in the drying step, an evaporation rate of the solvent of the polyvinyl alcohol aqueous solution adhered to the support in the wet state is preferably 100 g/min or more per square meter of support. By rapidly drying the polyvinyl alcohol aqueous solution, a mesh-like network of polyvinyl alcohol can be more certainly formed.

In the method for producing the air-filter filter material according to the present invention, the polyvinyl alcohol aqueous solution is preferably obtained via adding 1 to 30 parts by mass of the cationic surfactant per hundred parts by mass of polyvinyl alcohol. An air-filter filter material, having still higher particle collection performance and a relatively low pressure loss, can be obtained.

In the method for producing the air-filter filter material according to the present invention, the polyvinyl alcohol aqueous solution is preferably obtained vis adding 5 to 50 parts by mass of the water repellent per hundred parts by mass of polyvinyl alcohol. A high PF value and water repellency are obtained.

In the method for producing the air-filter filter material according to the present invention, a total amount of the polyvinyl alcohol, the cationic surfactant, and the water repellent adhered to the support after completion of the drying step is preferably 0.05 to 1.50 mass%. A high PF value and water repellency are obtained.

In the method for producing the air-filter filter material according to the present invention, the support is preferably a nonwoven fabric for filter material containing glass fiber as a main component. Filter performance can be stably retained.

An air-filter filter material according to the present invention is an air-filter filter material including: a support having fluid permeability; and a mesh-like network of polyvinyl alcohol formed in pores serving as fluid permeation paths of the support, in which the mesh-like network is formed of nanofiber, has a degree of polymerization of the polyvinyl alcohol of 1500 to 6000, a degree of saponification of the polyvinyl alcohol of 60 to 90 mol%, and an amount of the polyvinyl alcohol, adhered to the support, of 0.05 to 1.00 mass%, contains a cationic surfactant and a water repellent, and is free of binder resins other than the polyvinyl alcohol.

Advantageous Effects of Invention

According to the present disclosure, an air-filter filter material in which filter performance, particularly particle collection performance, is improved and good water repellency is obtained by using polyvinyl alcohol, a cationic surfactant, and a water repellent and equipping pores of fluid permeation paths of a support with a mesh-like network of polyvinyl alcohol relatively randomly in the planar direction and the thickness direction of the support, can be provided. Further, according to the present disclosure, a method for producing such an air-filter filter material in a relatively short time can be provided.

Brief Description of Drawings

Fig. 1 is an image (observation magnification: 10000 times) of an air filter of Example 8 observed with a SEM.

Fig. 2 is an image (observation magnification: 10000 times) of an air filter of Example 9 observed with a SEM.

Fig. 3 is an image (observation magnification: 10000 times) of an air filter of Comparative Example 4 observed with a SEM.

Fig. 4 is an image (observation magnification: 10000 times) of an air filter of Comparative Example 9 observed with a SEM.

Fig. 5 is an image (observation magnification: 10000 times) of an air filter of Comparative Example 15 observed with a SEM.

Description of Embodiments

Next, the present invention is described in detail by showing embodiments; however, the present invention is not construed as being limited to these descriptions. The embodiment may be variously modified as long as the effect of the present invention is exhibited.

A method for producing an air-filter filter material according to the present embodiment includes: an adhesion step of adhering a polyvinyl alcohol aqueous solution to a support, having fluid permeability, and bringing the support into a wet state; and a drying step of drying the polyvinyl alcohol aqueous solution adhered to the support in a wet state at 140°C or higher; in the method, the polyvinyl alcohol aqueous solution contains a cationic surfactant and a water repellent and is free of binder resins other than polyvinyl alcohol, and pores, serving as fluid permeation paths, of the support is, by the polyvinyl alcohol aqueous solution being dried after completion of the drying step, equipped with a mesh-like network of polyvinyl alcohol.

The polyvinyl alcohol aqueous solution containing a cationic surfactant and a water repellent is hereinafter also simply referred to as a "polyvinyl alcohol aqueous solution".

<Support>

The support is not particularly limited as long as it has fluid permeability; for example, a porous material such as a nonwoven fabric, a woven fabric, paper, or a sponge can be used. Among them, a nonwoven fabric is preferable, and a nonwoven fabric for filter material containing fiber such as glass fiber or organic fiber as a main component is particularly preferable. A nonwoven fabric for filter material containing glass fiber as a main component is more preferable in that filter performance can be stably retained. The phrase "containing fiber such as glass fiber or organic fiber as a main component" means that the mass of the fiber with respect to the total mass of the support is 50 mass% or more. The mass is preferably 80 mass% or more. When the support is a nonwoven fabric containing the fiber as a main component, the mass per unit area is preferably 10 to 300 g/m$^2$, and more preferably 30 to 200 g/m$^2$. The fluid permeability refers to a property of allowing at least gas to permeate through the support, and more preferably refers to a property of allowing gas and liquid to permeate through the support.

The pressure loss of the support is preferably 1 Pa to 500 Pa. The pressure loss is more preferably 10 Pa to 300 Pa, and still more preferably 30 Pa to 200 Pa.

When the pressure loss of the support is less than 1 Pa, the pore size of the support is too large, therefore a network of polyvinyl alcohol is difficult to stretch around and is less likely to contribute to an increase in collection efficiency, and the PF value may not be increased. When the pressure loss of the support is more than 500 Pa, the collection efficiency of the support itself is very high, thus a network of polyvinyl alcohol is less likely to contribute to the collection efficiency of the support, and the PF value may not be increased.

The glass fiber used for the support is, for example, wool-like ultrafine glass fiber produced by a flame stretching method or a rotary method, or chopped strand glass fiber, having a predetermined fiber length produced by cutting, a bundle of spun glass fiber having a predetermined fiber diameter. Glass fibers having various fiber diameters and fiber lengths are selected from them depending on the required physical properties, and are used singly or by mixture. For example, a nonwoven fabric formed of a glass fiber that is obtained by mixing two or more kinds of ultrafine glass fibers having different average fiber diameters and chopped strand glass fiber is preferable. Also low boron glass fiber or silica glass fiber can be used for the purpose of preventing boron contamination of silicon wafers in use of semiconductor manufacturing processes. The average fiber diameter of the glass fiber is not particularly limited, but is preferably 0.05 to 20 μm. The average fiber diameter is more preferably 0.1 to 5 μm. The average fiber length of the glass fiber is not particularly limited, but is preferably 0.5 to 10000 μm. The average fiber length is more preferably 1 to 1000 μm. On the other hand, the organic fiber is, for example, polypropylene fiber, acrylic fiber, vinylon fiber, cellulose fiber, polyester fiber, or aramid fiber. The average fiber diameter of the organic fiber is not particularly limited, but is preferably 0.05 to 100 μm. The average fiber diameter is more preferably 0.1 to 50 μm. The average fiber length of the organic fiber is not particularly limited, but is preferably 0.5 to 10000 μm provided that the organic fiber is short fiber. The average fiber length is more preferably 10 to 5000 μm. The method for producing the nonwoven fabric is not particularly limited, and is, for example, a dry method or a wet method.

The shape of the support is not particularly limited, and does not need to have a planar structure like a sheet shape. For example, the support may have a three-dimensional processed structure like a pleated structure including zigzag folds formed by alternating mountain folds and valley folds. A support having a pleated structure in advance, even having a long-length, can be dried in a drying region having a limited volume, and can turn into an air-filter filter material to which polyvinyl alcohol is efficiently adhered.

The average pore size of the support is preferably 0.1 to 50 $\mu$m. The average pore size is more preferably 0.5 to 10 $\mu$m. When the average pore size is less than 0.1 $\mu$m, fluid permeability may be poor. When the average pore size is more than 50 $\mu$m, a mesh-like structure made of polyvinyl alcohol may be difficult to be uniformly formed in pores of the support. In the present embodiment, an air filter can be obtained by adhering an aqueous solution containing polyvinyl alcohol and water into pores of a support and then performing drying; by using a support having an appropriate average pore size, the aqueous solution is uniformly distributed into pore sizes, and a mesh-like structure is easily kept even after drying. Here, the average pore size can be measured in accordance with ASTM E 1294-89, the "half-dry method".

The support is preferably a material, usable as an air-filter filter material, in itself. In the method for producing an air filter according to the present embodiment, such a support easily turns into an air filter having higher particle collection performance than a conventional air-filter filter material (a support itself). The support may be in a wet state; for example, a liquid of polyvinyl alcohol may be adhered to a support in a wet state in the middle of a papermaking process.

The polyvinyl alcohol is produced by saponification of carboxy groups in polyvinyl acetate as a source material, that is, conversion of carboxy groups to hydroxy group by alkaline hydrolysis. Here, the ratio of former carboxy groups that are currently hydroxy groups obtained by the conversion is particularly referred to as the degree of saponification.

The degree of saponification of polyvinyl alcohol is preferably 80 to 98 mol%, and more preferably 82 to 90 mol%. When the degree of saponification of polyvinyl alcohol is less than 80 mol%, the polyvinyl alcohol is not completely dissolved, and occasionally fails to produce a suitable PF value. When the degree of saponification of polyvinyl alcohol is more than 98 mol%, the degree of saponification is high and the hydrophobization effect is weak, and therefore a network may be difficult to form.

The degree of polymerization of polyvinyl alcohol is preferably 1500 to 6000. The degree of polymerization is more preferably 2000 or more and 5000 or less. Examples include PVA 95-88 (the degree of saponification: 88 mol%, the degree of polymerization: 3500, manufactured by Kuraray Co., Ltd.). When the degree of polymerization of polyvinyl alcohol is less than 1500, a network structure of polyvinyl alcohol is difficult to form, and the PF value may not be increased, and when the degree of polymerization of polyvinyl alcohol is more than 6000, polyvinyl alcohol is difficult to dissolve, and therefore the PF value may not be increased by undissolved portions remain.

In the present embodiment, the degree of saponification of polyvinyl alcohol is preferably 80 to 98 mol%, and the degree of polymerization of polyvinyl alcohol is preferably 1500 to 6000. By setting the degree of saponification and the degree of polymerization of polyvinyl alcohol within such ranges, a mesh-like network of polyvinyl alcohol is more easily formed, and the PF value is improved.

In the present embodiment, the polyvinyl alcohol aqueous solution may contain additives other than polyvinyl alcohol. The additive is a surfactant, a water repellent, an antifoaming agent, fine fiber, fine particles, or the like. However, the polyvinyl alcohol aqueous solution needs to be free of binder resins other than polyvinyl alcohol. When a binder resin other than polyvinyl alcohol is contained in the polyvinyl alcohol aqueous solution, an improvement in PF value does not appear on the basis of comparison between the PF value of the obtained air-filter filter material and the measured PF value of the support alone. This is because formation of a mesh-like network of polyvinyl alcohol is inhibited.

In the present embodiment, the polyvinyl alcohol aqueous solution preferably contains a cationic surfactant as an additive other than polyvinyl alcohol. When an embodiment in which a polyvinyl alcohol aqueous solution containing a cationic surfactant is used and an embodiment in which a polyvinyl alcohol aqueous solution free of a cationic surfactant is used are compared, the PF value is further improved in the embodiment in which a cationic surfactant is contained. Even when an anionic surfactant or an amphoteric surfactant is included in the polyvinyl alcohol aqueous solution, an improvement in PF value is not seen; thus, this further improvement in PF value is due to blending of a cationic surfactant.

The cationic surfactant is roughly classified into a quaternary ammonium salt type and an amine salt type, and a quaternary ammonium salt type is preferable, examples of which include alkyltrimethylammonium chloride, dialkyldimethylammonium chloride, perfluoroalkyltrialkylammonium salts, and the like. Among them, the perfluoroalkyltrialkylammonium salt is a fluorine-based cationic surfactant. Examples of the amine salt type include monoalkylamine salts, dialkylamine salts, trialkylamine salts, and the like.

The polyvinyl alcohol aqueous solution is preferably obtained via adding 1 to 30 parts by mass of the cationic surfactant per hundred parts by mass of polyvinyl alcohol. When the cationic surfactant is a perfluoroalkyltrialkylammonium salt, the aqueous solution is preferably obtained via adding 1 to 30 parts by mass of the salt and more preferably obtained via adding 15 to 30 parts by mass of the salt per hundred parts by mass of polyvinyl alcohol. When the cationic surfactant is alkyltrimethylammonium chloride, the aqueous solution is preferably obtained via adding 5 to 10 parts by mass of the chloride per hundred parts by mass of polyvinyl alcohol.

In the present embodiment, the polyvinyl alcohol aqueous solution further contains, as an additive other than polyvinyl alcohol, a water repellent in addition to the cationic surfactant. When an embodiment in which a polyvinyl alcohol aqueous solution containing a cationic surfactant and a water repellent is used and an embodiment in which a polyvinyl alcohol aqueous solution containing a cationic surfactant and free of a water repellent is used are compared, the embodiment in which the solution containing the cationic surfactant and the water repellent brings about water repellency while keeping a PF value. By the polyvinyl aqueous solution containing the water repellent without cationic surfactants, although water repellency is obtained, a high PF value is not obtained. To obtain a high PF value and water repellency, it is necessary to use a polyvinyl alcohol aqueous solution containing both a cationic surfactant and a water repellent.

The water repellent is preferably a fluorine-based resin, and more preferably a cationic fluorine-based resin. The water repellent is still more preferably a cationic fluorine-based resin having a zeta potential of +10 mV or more, preferably +20 mV or more, and more preferably +30 mV or more. Examples include AG-E310 (manufactured by AGC Inc.) and the like.

The polyvinyl alcohol aqueous solution is preferably obtained via adding 5 to 50 parts by mass of the water repellent and more preferably obtained via adding 10 to 20 parts by mass of the water repellent per hundred parts by mass of polyvinyl alcohol. Via adding less than 5 parts by mass, water repellency may fail to be obtained, and via adding more than 50 parts by mass, the balance between a high PF value and high water repellency may be lost.

The blending mass ratio of the cationic surfactant to the water repellent is preferably 1:0.3 to 1:5, and more preferably 1:1 to 1:3.5.

In the air-filter filter material obtained by the production method according to the present embodiment, it is preferable that fibrous polyvinyl alcohol be entangled in pores of the support and voids be formed between pieces of the fibrous polyvinyl alcohol, and it is preferable that a film-like structure in which pieces of polyvinyl alcohol are stacked not be present. An increase in pressure loss can be prevented, and the particle permeability can be reduced. The film-like structure in which pieces of polyvinyl alcohol are stacked refers to a film-like object formed by physical entanglement, chemical aggregation, or the like of polyvinyl alcohol and entirely or partially closing the pore of the support.

In the present embodiment, the ratio of the amount of polyvinyl alcohol adhered to the support is preferably set to 0.05 to 1.00 mass%. The ratio is more preferably 0.10 to 0.50 mass%. By setting such an amount of polyvinyl alcohol adhered thereto, an air filter having high particle collection performance and a relatively low pressure loss can be obtained. When the ratio of the amount of polyvinyl alcohol adhered to the support is less than 0.05 mass%, particle collection performance may be poor. Conversely, when the ratio is more than 1.00 mass%, a film-like shape closing pores of the support is likely to be formed, and this affects particle collection performance and may reduce filter performance. The amount of polyvinyl alcohol adhered to the support can be controlled mainly by the concentration of polyvinyl alcohol in the aqueous solution and the amount of the aqueous solution adhered to the support; as the concentration of polyvinyl alcohol in the aqueous solution is increased and as the amount of the aqueous solution adhered to the support is increased, the amount of polyvinyl alcohol adhered to the support increases.

In the present embodiment, the ratio of the total amount of polyvinyl alcohol, the cationic surfactant, and the water repellent adhered to the support is preferably set to 0.05 to 1.50 mass%. The ratio is more preferably 0.10 to 0.80 mass%.

In the present embodiment, the amount of the polyvinyl alcohol aqueous solution for being adhered to the support is preferably 50 g or more per square meter. The amount is more preferably 100 g or more. When the amount is less than 50 g, a mesh-like network is difficult to form between fibers of the support, and the PF value may be difficult to increase. The upper limit of the amount of the polyvinyl alcohol aqueous solution for being adhered to the support is, for example, 300 g per square meter.

In the present embodiment, after the polyvinyl alcohol aqueous solution is adhered to the support, a drying step of drying the polyvinyl alcohol aqueous solution at 140°C or higher is performed, and thus an air-filter filter material can be obtained. The aqueous solution can be obtained by dissolving polyvinyl alcohol in water. The form of polyvinyl alcohol in the aqueous solution is, for example, a form in which a single molecule or a unit of several molecules of polyvinyl alcohol is stably dissolved in the aqueous solution, or a form in which polyvinyl alcohol is partially aggregated. The form of polyvinyl alcohol in the aqueous solution is, of the above, preferably a form in which a single molecule or a unit of several molecules of polyvinyl alcohol is stably dissolved in the aqueous solution.

<Solvent>

The solvent contained in the polyvinyl alcohol aqueous solution is preferably water or a mixture of water and an organic solvent. The solvent is more preferably water.

<Polyvinyl alcohol aqueous solution>

In the present embodiment, the solid content concentration of polyvinyl alcohol in the aqueous solution is preferably set to 0.01 to 0.20 mass%. The solid content concentration is more preferably 0.03 to 0.10 mass%. When the solid content concentration of polyvinyl alcohol in the aqueous solution is less than 0.01 mass%, this solid content concentration is too low, and therefore a network of polyvinyl alcohol is difficult to form, and the PF value may not be increased, and when the solid content concentration is more than 0.20 mass%, a film-like structure of polyvinyl alcohol may be formed on the surface of the support. As described above, the polyvinyl alcohol aqueous solution is obtained via adding 1 to 30 parts by mass of a cationic surfactant per hundred parts by mass of polyvinyl alcohol. Further, as described above, the polyvinyl alcohol aqueous solution is obtained via adding 5 to 50 parts by mass of a water repellent, in addition to the cationic surfactant, per hundred parts by mass of polyvinyl alcohol.

<Preparation of the aqueous solution>

In the present embodiment, the method for preparing the aqueous solution is not particularly limited, and the above-described polyvinyl alcohol may be dissolved in water to prepare an aqueous solution. As a method for adding a cationic surfactant and a water repellent to the polyvinyl alcohol aqueous solution, in finally adjusting the concentration of polyvinyl alcohol after adding polyvinyl alcohol to water, dilution is performed using an aqueous solution containing a cationic surfactant with a concentration of about 0.5 to 3 mass% and an aqueous solution containing a water repellent with a concentration of about 0.5 to 3 mass%, and the concentrations of polyvinyl alcohol, the cationic surfactant, and the water repellent are adjusted.

The method for dissolving polyvinyl alcohol according to the present embodiment is not particularly limited; for example, a powder or liquid of polyvinyl alcohol is put into water and stirring is performed at about 100 to 700 rpm for 10 minutes by using a magnetic stirrer, a propeller-type stirrer, or the like. Next, the temperature is set to 95°C during stirring, and stirring is performed for about 2 hours; thus, neat dissolution is made.

<Adhesion step>

The method for adhering the aqueous solution to the support is, for example, an impregnation method, an application method, or a spraying method. The method is preferably a spraying method. The amount of the aqueous solution adhered to the support is adjusted in response to the thickness, material, and average pore size of the support as appropriate; as described above, in the present embodiment, the amount of polyvinyl alcohol adhered to the support is preferably 0.05% to 1.00%. When the amount of polyvinyl alcohol adhered to the support is less than 0.05 mass%, the amount of polyvinyl alcohol adhered to the support is insufficient, and it is difficult to form a uniform network of polyvinyl alcohol. As a result, there is a concern that particle collection performance as an air-filter filter material cannot be sufficiently improved. Conversely, when the amount is more than 1.00 mass%, the mesh-like network of polyvinyl alcohol is likely to become an aggregate film, and there is a concern that particle collection performance cannot be sufficiently improved. As described above, in the present embodiment, the ratio of the total amount of polyvinyl alcohol, the cationic surfactant, and the water repellent adhered to the support is preferably set to 0.05 to 1.50 mass%. In the present embodiment, the method for calculating the ratio of the amount of polyvinyl alcohol adhered to the support is not particularly limited; for example, when the support is formed only of inorganic fiber, calculation can be made from the ratio of weight reduction after combustion, specifically, after combustion of polyvinyl alcohol alone, alternatively after combustion of polyvinyl alcohol and a cationic surfactant where the cationic surfactant is contained, or alternatively after combustion of polyvinyl alcohol, a cationic surfactant, and a water repellent where the cationic surfactant and the water repellent are contained. The ratio of the amount of polyvinyl alcohol adhered to the support may be determined by conversion from the amount of wetly adhered substances. That is, the ratio (unit: %) of the amount of polyvinyl alcohol adhered to the support is {(the amount of wetly adhered substances $\times$ the solid content concentration of polyvinyl alcohol in the aqueous solution)/the mass of the support before adhesion of the aqueous solution} $\times$ 100. The ratio of the amount of polyvinyl alcohol and the cationic surfactant adhered to the support may be determined by conversion from the amount of wetly adhered substances. That is, the ratio (unit: %) of the amount of polyvinyl alcohol and the cationic surfactant adhered to the support is {(the amount of wetly adhered substances $\times$ the total solid content concentration of polyvinyl alcohol and the cationic surfactant in the aqueous solution)/the mass of the support before adhesion of the aqueous solution} $\times$ 100. The ratio of the amount of polyvinyl alcohol, the cationic surfactant, and the water repellent adhered to the support may be determined by conversion from the amount of wetly adhered substances. That is, the ratio (unit: %) of the amount of polyvinyl alcohol, the cationic surfactant, and the water repellent adhered to the support is {(the amount of wetly adhered substances $\times$ the total solid content concentration of polyvinyl alcohol, the cationic surfactant, and the water repellent in the aqueous solution)/the mass of the support before adhesion of the aqueous solution} $\times$ 100. Here, the amount of wetly adhered substances is the difference between the mass of the support in a wet state where the aqueous solution is adhered and the mass of the support before adhesion, and means the mass of the aqueous solution adhered to the support at the time of the start of the drying step. Therefore, the amount of wetly adhered substances is preferably a value measured immediately before the drying step; for example, the amount is preferably measured within 10 minutes and more preferably measured within 5 minutes in which the drying step is started.

The impregnation method is, for example, a method of completely immersing the support in the aqueous solution, or a method of immersing only a surface of the support. The method of completely immersing the support in the aqueous solution is excellent in that a more uniform network of polyvinyl alcohol can be formed by virtue of capability in efficient and reliable permeation of the aqueous solution into depths of the interiors of pores of the support. Further, when the support is simultaneously depressurized and completely immersed in the aqueous solution, the air in the support easily escapes; thus, this is more effective in permeations of the aqueous solution. The aqueous solution excessively adhered is preferably squeezed out with a roll dehydrator or the like, or removed with a water absorbing member such as water absorbing felt or water absorbing paper. The method of immersing only a surface of the support is effective in equipping pores with the network structure of polyvinyl alcohol having a difference in density (the existence ratios of the network structure of polyvinyl alcohol being different between one surface side and the other surface of the support) in the thickness direction of the support.

The application method is a method of applying the aqueous solution, to a surface of the support, with a known coating machine or brush. The known coating machines is, for example, a curtain coater or a die coater. The application method is excellent in that the amount of the aqueous solution adhered to the support is easily controlled.

The spraying method is a method of spraying the aqueous solution onto a surface of the support by using a known sprayer such as an atomizer or a spray. The spraying method is effective in, for example, intention to form a network structure of polyvinyl alcohol only in area, of the pores of the support, in the vicinity of a surface of the support, or avoidance of a large amount of impregnation liquid or a roll or a bar of a coating machine coming into contact with the support.

In the present embodiment, the spraying method is more preferable. In the impregnation method, although there is an advantage in liquid permeation, wiping off the excessively adhered liquid involves wiping off, for example, liquid adhered between glass fibers, and a mesh-like network is difficult to form after drying. Further, even when dehydration is performed with a suction machine or the like instead of wiping, a film of liquid is lost between fibers and a network is not formed, and filter performance is not increased. On the other hand, in the spraying method, since the amount of liquid adhered is controllable, an excessive amount of liquid is not necessary to adhere, and filter performance can be stably increased.

<Drying step>

In the present embodiment, after the aqueous solution is adhered to the support and the support is brought into a wet state in the above manner, drying is performed at 140°C or higher. The temperature is preferably 140 to 250°C, and more preferably 170 to 220°C. The drying temperature herein refers to the maximum drying temperature of the drying apparatus in the drying process.

In the present embodiment, a drum-type heat dryer, a hot air dryer, an infrared dryer, or the like is preferable as the drying equipment. These drying methods may be combined. The drying herein is performed at normal pressure.

In the present embodiment, in the drying step, the evaporation rate of the solvent of the polyvinyl alcohol aqueous solution adhered to the support in a wet state is preferably 100 g/min or more per square meter of support. The evaporation rate is more preferably 120 g/min or more. When the evaporation rate is less than 100 g/min, the drying rate is slow, and therefore a mesh-like network of polyvinyl alcohol occasionally fails to be formed. The upper limit of the evaporation rate is, for example, 300 g/min.

In the present embodiment, a current of air may be used during drying. The purpose of using a current of air is to prevent evaporated water vapor from remaining around the support and to promote volatilization of liquid. However, when the current of air is so strong as to penetrate the interior of the filter material, the film of liquid adhered between fibers may be broken; thus, a moderate air flow rate is preferable.

The polyvinyl alcohol aqueous solution containing a cationic surfactant reduces the amount of the aqueous solution adhered to the support as compared with the polyvinyl alcohol aqueous solution free of cationic surfactants. When a cationic surfactant is contained, it is surmised that water filtering is improved and accordingly the amount adhered is reduced. When the amount of the aqueous solution adhered is reduced, the load during heat drying is reduced and the drying time is shortened, and productivity is improved.

In the present embodiment, the solid shape of polyvinyl alcohol obtained after drying is fibrous, preferably nanofiber, more preferably nanofiber having a number average fiber diameter of 10 to 500 nm, and still more preferably nanofiber having a number average fiber diameter of 10 to 100 nm. To obtain an air filter that achieves both high particle collection performance and low pressure loss, it is important that a uniform fiber network formed of polyvinyl alcohol having a very small fiber diameter be formed in the support. By using nanofiber, particularly ultrafine polyvinyl alcohol having a number average fiber diameter of 500 nm or less, the number of fibers per unit volume in the air-filter filter material is significantly increased and particles in gas are easily captured, and high collection performance can be obtained. Further, the air flow resistance of a single fiber is very low by virtue of the slip flow effect, and pressure loss as an air filter is less likely to increase. The number average fiber diameter of polyvinyl alcohol herein is calculated by the following. A water-soluble polymer as a cast coating on a carbon film-coated grid is observed in an electron microscope image by using a transmission electron microscope (TEM). On the obtained observation image, vertical and horizontal axes, i.e., two axes per image are freely drawn, and the fiber diameter of a fiber intersecting each axis is visually read. In this regard, observation is performed at a magnification of 5000 times, 10000 times, or 50000 times depending on the size of the constituent fiber. The sample or the magnification is set under the condition that 20 or more fibers intersect an axis. In this way, at least three images of not-overlapping surface parts are captured with an electron microscope, and the value of the fiber diameter of a fiber intersecting each of the two axes is read. Therefore, at least 20 fibers $\times$ 2 $\times$ 3 = 120 pieces of fiber information are obtained. The number average fiber diameter was calculated from fiber diameter data thus obtained. Regarding branched fibers, provided that the length of the branched part is 50 nm or more, the branched part is incorporated into the calculation of the fiber diameter as one fiber. The number average fiber diameter may be calculated also in accordance with the following. Polyvinyl alcohol present on a surface of the support or in the interior of the support is observed through an electron microscope image by using a scanning electron microscope (SEM). On the obtained observation image, vertical and horizontal axes, i.e., two axes per image are randomly drawn, and the fiber diameter of a fiber intersecting the axis is visually read. In this regard, observation is performed at a magnification, within a range of 5000 to 50000 times, depending on the size of the constituent fiber. A plurality of images of not-overlapping surface parts are captured with an electron microscope, and the value of the fiber diameter of a fiber intersecting each of the two axes is read. The number average fiber diameter is calculated from at least 120 pieces of fiber diameter data. Regarding branched fibers, provided that the length of the branched part is 50 nm or more, the branched part is incorporated into the calculation of the fiber diameter as one fiber. In order to obtain an observation image without distortion, the sample is subjected to conductive coating in advance, or also the influence of the coating film thickness is taken into account. For example, given that ion sputtering (E-1045, manufactured by Hitachi High-Technologies Corporation) is used with the discharge current of 15 mA, the sample-target distance of 30 mm, the degree of vacuum of 6 Pa, and the coating time of 2 minutes, the coating film thickness is 12 nm. However, since the deposition direction of the coating film is perpendicular to the assumed direction in measuring the fiber diameter, the coating film thickness is set to half the assumed thickness in measuring the fiber diameter. That is, given that coating is performed under the above conditions, a coating film thickness of 12 nm (6 nm + 6 nm) at both ends is excluded from the fiber diameter determined from SEM.

An air-filter filter material obtained by the method for producing the same according to the present embodiment includes: a support having fluid permeability; and a mesh-like network of polyvinyl alcohol formed in pores serving as fluid permeation paths of the support; in the air-filter filter material, the mesh-like network is formed of nanofiber, has a degree of polymerization of the polyvinyl alcohol of 1500 to 6000, a degree of saponification of the polyvinyl alcohol of 60 to 90 mol%, and an amount of the polyvinyl alcohol, adhered to the support, of 0.05 to 1.00 mass%, contains a cationic surfactant and a water repellent, and is free of binder resins other than the polyvinyl alcohol. Here, 1 to 30 parts by mass of the cationic surfactant per hundred parts by mass of polyvinyl alcohol is preferably added. Further, 5 to 50 parts by mass of the water repellent per hundred parts by mass of polyvinyl alcohol is preferably added. Here, the air-filter filter material is free of binder resins other than the polyvinyl alcohol. When the air-filter filter material further contains a binder resin other than polyvinyl alcohol, an improvement in PF value is not seen on the basis of the PF value obtained by measuring the support alone. This is because further containing a binder resin other than polyvinyl alcohol does not produce a mesh-like network of polyvinyl alcohol. Further, by the containing of a cationic surfactant and a water repellent, the PF value and the water repellency are enhanced as compared to those where neither a cationic surfactant nor a water repellent is contained. In the air-filter filter material obtained by the method for producing the same according to the present embodiment, the total amount of polyvinyl alcohol, the cationic surfactant, and the water repellent adhered to the support is preferably 0.05 to 1.50 mass%. Further, the nanofiber is preferably nanofiber having a number average fiber diameter of 10 to 500 nm.

The PF value of the air-filter filter material obtained by the method for producing the same according to the present embodiment is preferably, by 0.5 or more, higher than the PF value of the support under the conditions of a surface air flow velocity of 5.3 cm/sec and a target particle within 0.10 to 0.15 $\mu$m. The PF value is an index for evaluating the superiority or inferiority of the balance between pressure loss and particle collection performance, and is calculated using the formula shown in Math. 1. A higher PF value indicates that the air-filter filter material has a lower particle permeability of the target particle and a lower pressure loss.

[Math. 1]

$$PF\ value = \frac{\log_{10}(Permeability\ of\ PAO[\%]/100)}{Pressure\ loss[Pa]/9.81} \times (-100)$$

In Math. 1, the pressure loss is measured using, for example, a manometer. The particle permeability is the ratio of polyalphaolefin (PAO) particles permeating through an air filter or an air-filter filter material to polydisperse PAO particles generated with a Laskin nozzle to pass therethrough with air. The particle permeability is measured using, for example, a laser particle counter.

The PF value of the air-filter filter material, although it is affected by the type or configuration of the support, is greatly affected by the packing density of polyvinyl alcohol or the degree of formation of a network by polyvinyl alcohol. In the air-filter filter material obtained by the method for producing the same according to the present embodiment, the concentration of the polyvinyl alcohol aqueous solution for being adhered to the support is preferably 0.01 to 0.20 mass%; however, even at such an adhesion concentration, for example, adhesion of polyvinyl alcohol concentrated in the interior of the pore of the support and/or on the surface of the support and the partially excessively increased packing density of polyvinyl alcohol cause an excessive increase in pressure loss, and consequently reduce the PF value. The air-filter filter material includes a mesh-like network of polyvinyl alcohol in the interior of the support and/or on the surface of the support and preferably excludes a film-like structure of polyvinyl alcohol. Regarding the film-like structure of polyvinyl alcohol, more specifically, when an aqueous solution having a high concentration of polyvinyl alcohol is adhered to the support, it is conceivable that adhesion of polyvinyl alcohol is concentrated in the interior the pore of the support and/or on the surface of the support, and polyvinyl alcohol molecules are stacked to form a film-like object in the interior of the pore of the support and/or on the surface of the support. As a result, in the outer layer of the support, a mesh-like network of polyvinyl alcohol may not be formed, but a film-like structure may be generated. When an air-filter filter material where such a film-like structure is generated even partially is used, an increase in pressure loss or a reduction in particle collection performance (that is, a reduction in PF value) occurs, and air permeability as an air filter occasionally fails to be retained. Adhesion of polyvinyl alcohol concentrated only around the outer layer of the support, provided that a network of polyvinyl alcohol is moderately formed (provided that the packing density of polyvinyl alcohol is not excessively high), does not increase pressure loss so much, so that a PF value suitable as an air filter can be obtained. In the present embodiment, examples of the form "having a mesh-like network of polyvinyl alcohol in pores serving as fluid permeation paths" include the following three forms: a form in which a network structure formed by mesh-like entanglement of nanofiber formed of polyvinyl alcohol is present in the interiors of pores serving as fluid permeation paths, a form in which such a network structure is present on the surface, and a form in which such a network structure is present both in the interiors and on the surface. By virtue of an air-filter filter material is produced by using a polyvinyl alcohol aqueous solution containing a cationic surfactant and a water repellent, the formation of a mesh-like network of polyvinyl alcohol is more optimized, and the PF value and the water repellency are more enhanced.

Examples

Next, the present invention is described more specifically by showing Examples; however, the present invention is not limited to these Examples. In the examples, "part" and "%" represent "part by mass" and "mass%", respectively, unless otherwise specified. The number of parts added is a value on a solid content basis.

[Step of pre-preparing a polyvinyl alcohol aqueous solution]

998.0 g of water was put into a 1000 ml beaker, then 2.0 g of a powder of polyvinyl alcohol (the degree of saponification: 88 mol%, the degree of polymerization: 3500, PVA 95-88, manufactured by Kuraray Co., Ltd.) was put into the beaker, and stirring was performed for 10 minutes with a propeller-type stirrer. Next, the temperature was set to 95°C during stir, and stirring was performed for 2 hours to perform dissolution. The solid content concentration of polyvinyl alcohol with respect to the total mass of the aqueous solution was 0.20%, and dilution was performed with water to obtain the concentration of each of Examples and Comparative Examples. The water used for adjustment of the aqueous solution was always distilled water.

(Example 1)

[Adhesion and drying of polyvinyl alcohol]

A polyvinyl alcohol aqueous solution was prepared such that the concentration of polyvinyl alcohol (the degree of saponification: 88 mol%, the degree of polymerization: 3500, PVA 95-88, manufactured by Kuraray Co., Ltd.) was 0.07%, the concentration of a surfactant (a perfluoroalkyltrialkylammonium salt, a fluorine-based cationic surfactant, Surflon S-221, manufactured by AGC Seimi Chemical Co., Ltd.) was 0.0105%, and the concentration of a water repellent (a fluorine-based cationic water repellent, AG-E310, manufactured by AGC Inc., zeta potential: 30.8 mV) was 0.0035%); by spraying with a two-fluid nozzle spray, the amount, shown in Table 1, of the polyvinyl alcohol aqueous solution was adhered to a nonwoven fabric as a support (hereinafter, referred to as a "support") having a mass per unit area of 51 g/m$^2$ and a pressure loss of 67 Pa and formed of glass fiber (composed of 22 parts of ultrafine glass fiber having an average fiber diameter of 0.65 $\mu$m, 63 parts of ultrafine glass fiber having an average fiber diameter of 2.4 $\mu$m, and 15 parts of chopped glass fiber having an average fiber diameter of 6 $\mu$m); and drying was performed at 190°C with a hot air dryer; thus, an air-filter filter material was obtained. The total amount of polyvinyl alcohol and the surfactant adhered to the support was 0.43%.

(Example 2)

An air-filter filter material was obtained in a similar manner to Example 1 except that the concentration of the water repellent was changed to 0.0105% by an alternative polyvinyl alcohol aqueous solution, and the amount of the polyvinyl alcohol aqueous solution adhered was changed to the amount shown in Table 1. The total amount of polyvinyl alcohol and the surfactant adhered to the support was 0.45%.

(Example 3)

An air-filter filter material was obtained in a similar manner to Example 1 except that the concentration of the water repellent was changed to 0.0140% by an alternative polyvinyl alcohol aqueous solution, and the amount of the polyvinyl alcohol aqueous solution adhered was changed to the amount shown in Table 1. The total amount of polyvinyl alcohol and the surfactant adhered to the support was 0.47%.

(Example 4)

An air-filter filter material was obtained in a similar manner to Example 1 except that the concentration of the water repellent was changed to 0.0350% by an alternative polyvinyl alcohol aqueous solution, and the amount of the polyvinyl alcohol aqueous solution adhered was changed to the amount shown in Table 1. The total amount of polyvinyl alcohol and the surfactant adhered to the support was 0.55%.

(Example 5)

An air-filter filter material was obtained in a similar manner to Example 1 except that the concentration of the surfactant was changed to 0.0070% and the concentration of the water repellent was changed to 0.0070% by an alternative polyvinyl alcohol aqueous solution, and the amount of the polyvinyl alcohol aqueous solution adhered was changed to the amount shown in Table 2. The total amount of polyvinyl alcohol and the surfactant adhered to the support was 0.43%.

(Example 6)

An air-filter filter material was obtained in a similar manner to Example 1 except that the concentration of the surfactant was changed to 0.0070% and the concentration of the water repellent was changed to 0.0140% by an alternative polyvinyl alcohol aqueous solution), and the amount of the polyvinyl alcohol aqueous solution adhered was changed to the amount shown in Table 2. The total amount of polyvinyl alcohol and the surfactant adhered to the support was 0.44%.

(Example 7)

An air-filter filter material was obtained in a similar manner to Example 1 except that the concentration of the surfactant was changed to 0.0070% and the concentration of the water repellent was changed to 0.0350% by an alternative polyvinyl alcohol aqueous solution), and the amount of the polyvinyl alcohol aqueous solution adhered was changed to the amount shown in Table 2. The total amount of polyvinyl alcohol and the surfactant adhered to the support was 0.57%.

(Example 8)

An air-filter filter material was obtained in a similar manner to Example 1 except that the surfactant was changed to alkyltrimethylammonium chloride, a cationic surfactant, CATIOGEN TML, manufactured by DKS Co. Ltd., the concentration of the surfactant was changed to 0.0070% and the concentration of the water repellent was changed to 0.0070% by an alternative polyvinyl alcohol aqueous solution), and the amount of the polyvinyl alcohol aqueous solution adhered was changed to the amount shown in Table 2. The total amount of polyvinyl alcohol and the surfactant adhered to the support was 0.43%.

(Example 9)

An air-filter filter material was obtained in a similar manner to Example 1 except that the surfactant was changed to alkyltrimethylammonium chloride, a cationic surfactant, CATIOGEN TML, manufactured by DKS Co. Ltd., the concentration of the surfactant was changed to 0.0070% and the concentration of the water repellent was changed to 0.0140% by an alternative polyvinyl alcohol aqueous solution), and the amount of the polyvinyl alcohol aqueous solution adhered was changed to the amount shown in Table 2. The total amount of polyvinyl alcohol and the surfactant adhered to the support was 0.46%.

(Example 10)

An air-filter filter material was obtained in a similar manner to Example 1 except that the surfactant was changed to alkyltrimethylammonium chloride, a cationic surfactant, CATIOGEN TML, manufactured by DKS Co. Ltd., the concentration of the surfactant was changed to 0.0070% and the concentration of the water repellent was changed to 0.0350% by an alternative polyvinyl alcohol aqueous solution), and the amount of the polyvinyl alcohol aqueous solution adhered was changed to the amount shown in Table 2. The total amount of polyvinyl alcohol and the surfactant adhered to the support was 0.55%.

(Comparative Example 1)

The "support" formed of the glass fiber of Example 1, remaining unchanged, was used as an air filter material.

(Comparative Example 2)

An air-filter filter material was obtained in a similar manner to Example 1 except that the concentration of polyvinyl alcohol (the degree of saponification: 88 mol%, the degree of polymerization: 3500, PVA 95-88, manufactured by Kuraray Co., Ltd.) was changed to 0.07%, the concentration of the surfactant was changed to 0%, and the concentration of the water repellent was changed to 0% by an alternative polyvinyl alcohol aqueous solution, and the amount of the polyvinyl alcohol aqueous solution adhered was changed to the amount shown in Table 1. The total amount of polyvinyl alcohol and the surfactant adhered to the support was 0.39%.

(Comparative Example 3)

An air-filter filter material was obtained in a similar manner to Example 1 except that the concentration of the surfactant was changed to 0% and the concentration of the water repellent was changed to 0.0070% by an alternative polyvinyl alcohol aqueous solution, and the amount of the polyvinyl alcohol aqueous solution adhered was changed to the amount shown in Table **3.** The total amount of polyvinyl alcohol and the surfactant adhered to the support was 0.38%.

(Comparative Example 4)

An air-filter filter material was obtained in a similar manner to Example 1 except that the concentration of the surfactant was changed to 0% and the concentration of the water repellent was changed to 0.0140% by an alternative polyvinyl alcohol aqueous solution, and the amount of the polyvinyl alcohol aqueous solution adhered was changed to the amount shown in Table 3. The total amount of polyvinyl alcohol and the surfactant adhered to the support was 0.40%.

(Comparative Example 5)

An air-filter filter material was obtained in a similar manner to Example 1 except that the concentration of the surfactant was changed to 0% and the concentration of the water repellent was changed to 0.0350% by an alternative polyvinyl alcohol aqueous solution, and the amount of the polyvinyl alcohol aqueous solution adhered was changed to the amount shown in Table 3. The total amount of polyvinyl alcohol and the surfactant adhered to the support was 0.53%.

(Comparative Example 6)

An air-filter filter material was obtained in a similar manner to Example 1 except that the concentration of the surfactant was changed to 0% and the concentration of the water repellent was changed to 0.0420% by an alternative polyvinyl alcohol aqueous solution, and the amount of the polyvinyl alcohol aqueous solution adhered was changed to the amount shown in Table 3. The total amount of polyvinyl alcohol and the surfactant adhered to the support was 0.57%.

(Comparative Example 7)

An air-filter filter material was obtained in a similar manner to Example 1 except that the concentration of the surfactant was changed to 0% and the concentration of the water repellent was changed to 0.0490% by an alternative polyvinyl alcohol aqueous solution, and the amount of the polyvinyl alcohol aqueous solution adhered was changed to the amount shown in Table 3. The total amount of polyvinyl alcohol and the surfactant adhered to the support was 0.62%.

(Comparative Example 8)

An air-filter filter material was obtained in a similar manner to Example 1 except that the concentration of the surfactant was changed to 0%, the water repellent was changed to a non-fluorine-based cationic hydrocarbon-based polymer-based water repellent, MEISHIELD P-350K, manufactured by Meisei Chemical Works, Ltd., zeta potential: 37.8 mV, and the concentration of the water repellent was changed to 0.0007% by an alternative polyvinyl alcohol aqueous solution, and the amount of the polyvinyl alcohol aqueous solution adhered was changed to the amount shown in Table 3. The total amount of polyvinyl alcohol and the surfactant adhered to the support was 0.33%.

(Comparative Example 9)

An air-filter filter material was obtained in a similar manner to Example 1 except that the concentration of the surfactant was changed to 0%, the water repellent was changed to a non-fluorine-based cationic hydrocarbon-based polymer-based water repellent, MEISHIELD P-350K, manufactured by Meisei Chemical Works, Ltd., zeta potential: 37.8 mV, and the concentration of the water repellent was changed to 0.0070% by an alternative polyvinyl alcohol aqueous solution, and the amount of the polyvinyl alcohol aqueous solution adhered was changed to the amount shown in Table 3. The total amount of polyvinyl alcohol and the surfactant adhered to the support was 0.41%.

(Comparative Example 10)

An air-filter filter material was obtained in a similar manner to Example 1 except that the concentration of the surfactant was changed to 0%, the water repellent was changed to a non-fluorine-based cationic hydrocarbon-based polymer-based water repellent, MEISHIELD Z-1, manufactured by Meisei Chemical Works, Ltd., zeta potential: 13.7 mV, and the concentration of the water repellent was changed to 0.0007% by an alternative polyvinyl alcohol aqueous solution, and the amount of the polyvinyl alcohol aqueous solution adhered was changed to the amount shown in Table 3. The total amount of polyvinyl alcohol and the surfactant adhered to the support was 0.34%.

(Comparative Example 11)

An air-filter filter material was obtained in a similar manner to Example 1 except that the concentration of the surfactant was changed to 0%, the water repellent was changed to a non-fluorine-based cationic hydrocarbon-based polymer-based water repellent, MEISHIELD Z-1, manufactured by Meisei Chemical Works, Ltd., zeta potential: 13.7 mV, and the concentration of the water repellent was changed to 0.0070% by an alternative polyvinyl alcohol aqueous solution, and the amount of the polyvinyl alcohol aqueous solution adhered was changed to the amount shown in Table 3. The total amount of polyvinyl alcohol and the surfactant adhered to the support was 0.36%.

(Comparative Example 12)

An air-filter filter material was obtained in a similar manner to Example 1 except that an acrylic-based resin (trade name: Ultrasol FB-19, manufactured by Aica Kogyo Co., Ltd.) was further added in preparing the polyvinyl alcohol aqueous solution with the concentration in the aqueous solution set to 0.0007%, and the amount of the polyvinyl alcohol aqueous solution containing the acrylic-based resin adhered was changed to the amount shown in Table 4. The total amount of polyvinyl alcohol and the acrylic-based resin adhered to the support was 0.42%.

(Comparative Example 13)

An air-filter filter material was obtained in a similar manner to Example 1 except that the drying temperature was changed to 120°C and the amount of the polyvinyl alcohol aqueous solution adhered was changed to the amount shown in Table 4. The amount of polyvinyl alcohol adhered to the support was 0.42%.

(Comparative Example 14)

An air-filter filter material was obtained in a similar manner to Example 1 except that the surfactant was changed to a perfluoroalkyl compound, a fluorine-based amphoteric surfactant, Surflon S-232, manufactured by AGC Seimi Chemical Co., Ltd., and the concentration of the surfactant was changed to 0.0105% by an alternative polyvinyl alcohol aqueous solution, and the amount of the polyvinyl alcohol aqueous solution adhered was changed to the amount shown in Table 4. The total amount of polyvinyl alcohol and the surfactant adhered to the support was 0.43%.

(Comparative Example 15)

An air-filter filter material was obtained in a similar manner to Example 1 except that the surfactant was changed to sodium polyoxyethylene tridecyl ether sulfate, an anionic surfactant, HITENOL 330T, manufactured by DKS Co., Ltd., and the concentration of the surfactant was changed to 0.0105% by an alternative polyvinyl alcohol aqueous solution, and the amount of the polyvinyl alcohol aqueous solution adhered was changed to the amount shown in Table 4. The total amount of polyvinyl alcohol and the surfactant adhered to the support was 0.42%.

Fabrication conditions and physical property values of the air-filter filter materials obtained in the Examples and the Comparative Examples are shown in Tables 1 to 4. The physical property values were measured by the methods shown below.

[Table 1]

| | Sample | Amount of adhered substances (%) | Amount of wetly adhered substances (g/m²) | Amount of surfactant added (per PVA (%)) | Amount of water repellent added (per PVA (%)) | Pressure loss (Pa) | 0.10-0.15μm Particle permeability (%) | 0.10-0.15μm PF value | Water repellency (mm) | Evaporation rate g/min | Gurley stiffness T (mN) | Tensile strength (kN/m) |
|---|---|---|---|---|---|---|---|---|---|---|---|---|
| Comparative Example 1 | PXC blank | - | - | - | - | 67 | 20.20 | 10.2 | 0 | - | 3.42 | 0.24 |
| Comparative Example 2 | B-33 alone | 0.39 | 280.1 | - | - | 85 | 6.30 | 13.9 | 0 | 171 | 475 | 0.48 |
| Example 1 | B-33(0.07%)+ Surflon S-221 (0.0105%)+ AG-E310(0.0035%) | 0.43 | 254.6 | 15 | 5 | 82 | 9.32 | 12.3 | 10 | 168 | 4.84 | 0.51 |
| Example 2 | B-33(0.07%)+ Surflon S-221 (0.0105%)+ AG-E310(0.0105%) | 0.45 | 245.9 | 15 | 15 | 79 | 8.15 | 13.5 | 130 | 168 | 4.91 | 0.46 |
| Example 3 | B-33(0.07%)+ Surflon S-221 (0.0105%)+ AG-E310(0.0140%) | 0.47 | 249.0 | 15 | 20 | 79 | 9.86 | 12.5 | 160 | 170 | 4.88 | 0.50 |
| Example 4 | B-33(0.07%)+ Surflon S-221 (0.0105%)+ AG-E310(0.0350%) | 0.55 | 237.8 | 15 | 50 | 76 | 9.94 | 12.9 | 320 | 172 | 4.92 | 0.51 |

[Table 2]

| Sample | Amount of adhered substances (%) | Amount of wetly adhered substances (g/m²) | Amount of surfactant added (per PVA (%)) | Amount of water repellent added (per PVA (%)) | Pressure loss (Pa) | 0.10-0.15 μm Particle permeability (%) | 0.10-0.15 μm PF value | Water repellency (mm) | Evaporation rate g/min | Gurley stiffness T (mN) | Tensile strength (kN/m) |
|---|---|---|---|---|---|---|---|---|---|---|---|
| Example 5 | B-33(0.07%)+ Surflon S-221 (0.0070%)+ AG-E310(0.0070%) | 0.43 | 256.6 | 10 | 10 | 77 | 6.41 | 15.2 | 47 | 168 | 4.95 | 0.51 |
| Example 6 | B-33(0.07%)+ Surflon S-221 (0.0070%)+ AG-E310(0.0140%) | 0.44 | 244.4 | 10 | 20 | 79 | 7.67 | 13.9 | 117 | 172 | 4.91 | 0.48 |
| Example 7 | B-33(0.07%)+ Surflon S-221 (0.0070%)+ AG-E310(0.0350%) | 0.57 | 255.1 | 10 | 50 | 74 | 11.89 | 12.3 | 320 | 173 | 4.93 | 0.49 |
| Example 8 | B-33(0.07%)+ CATIOGEN TML (0.0070%)+ AG-E310(0.0070%) | 0.43 | 255.1 | 10 | 10 | 81 | 4.65 | 16.1 | 80 | 170 | 4.97 | 0.53 |
| Example 9 | B-33(0.07%)+ CATIOGEN TML (0.0070%)+ AG-E310(0.0140%) | 0.46 | 254.6 | 10 | 20 | 81 | 5.66 | 15.1 | 203 | 171 | 4.90 | 0.49 |
| Example 10 | B-33(0.07%)+ CATIOGEN TML (0.0070%)+ AG-E310(0.0350%) | 0.55 | 245.4 | 10 | 50 | 74 | 13.97 | 11.3 | 430 | 167 | 4.92 | 0.51 |

[Table 3]

| | Sample | Amount of adhered substances (%) | Amount of wetly adhered substances (g/m$^2$) | Pressure loss (Pa) | 0.10-0.15 $\mu$ m | | Water repellency (mm) | Gurley stiffness T (mN) | Tensile strength (kN/m) |
| | | | | | Particle permeability (%) | PF value | | | |
|---|---|---|---|---|---|---|---|---|---|
| Comparative Example 3 | PVA95-88(0.07%) +AGE310(0.0070%) <relatively 10%> | 0.38 | 249.0 | 74 | 13.46 | 11.5 | 5 | 4.79 | 0.44 |
| Comparative Example 4 | PVA95-88(0.07%) +AGE310(0.0140%) <relatively 20%> | 0.40 | 237.8 | 75 | 15.15 | 10.7 | 20 | 4.81 | 0.46 |
| Comparative Example 5 | PVA95-88(0.07%) +AGE310(0.0350%) <relatively 50%> | 0.53 | 254.6 | 73 | 13.84 | 10.3 | 150 | 4.87 | 0.46 |
| Comparative Example 6 | PVA95-88(0.07%)+AG E310(0.0420%) <relatively 60%> | 0.57 | 254.6 | 71 | 18.89 | 10.0 | 210 | 4.94 | 0.48 |
| Comparative Example 7 | PVA95-88(0.07%) +AGE310(0.0490%) <relatively 70%> | 0.62 | 261.7 | 72 | 16.64 | 10.6 | 260 | 4.89 | 0.48 |
| Comparative Example 8 | PVA95-88(0.07%)+ MEISHIELD P-350K(0.0007%) <relatively 1%> | 0.33 | 236.2 | 73 | 13.38 | 11.7 | 0 | 4.44 | 0.47 |
| Comparative Example 9 | PVA95-88(0.07%)+ MEISHIELD P-350K(0.0070%) <relatively 10%> | 0.41 | 266.3 | 69 | 19.55 | 10.1 | 0 | 4.70 | 0.43 |
| Comparative Example 10 | PVA95-88(0.07%)+ MEISHIELD Z-1(0.0007%) <relatively 1%> | 0.34 | 239.8 | 72 | 13.90 | 11.7 | 0 | 4.68 | 0.48 |
| Comparative Example 11 | PVA95-88(0.07%)+ MEISHIELD Z-1 (0.0070%) <relatively 10%> | 0.36 | 236.2 | 69 | 17.13 | 10.9 | 0 | 4.75 | 0.47 |

[Table 4]

| | Sample | Amount of adhered substances (%) | Amount of wetly adhered substances (g/m²) | Amount of surfactant added (per PVA (%)) | Amount of water repellent added (per PVA (%)) | Pressure loss (Pa) | 0.10-0.15 μm | | Water repellency (mm) | Evaporation rate | Gurley stiffness T (mN) | Tensile strength (kN/m) |
|---|---|---|---|---|---|---|---|---|---|---|---|---|
| | | | | | | | Particle permeability (%) | PF value | | g/min | | |
| Comparative Example 12 | B-33(0.07%)+ Surflon S-221 (0.0105%)+ AG-E310(0.0035%) + Ultrasol FB-19 (0.0007%) | 0.42 | 250.0 | 15 | 5 | 69 | 17.55 | 10.3 | 10 | 165 | 4.78 | 0.48 |
| Comparative Example 13 | B-33(0.07%)+ Surflon S-221 (0.0105%)+ AG-E310(0.0035%) | 0.42 | 250.5 | 15 | 5 | 71 | 20.30 | 9.6 | 10 | Slow due to drying at 120°C (85) | 4.90 | 0.51 |
| Comparative Example 14 | B-33(0.07%)+ Surflon S-232 (0.0105%)+ AG-E310(0.0035%) | 0.43 | 251.0 | 15 | 5 | 70 | 18.14 | 10.4 | 10 | 164 | 4.78 | 0.47 |
| Comparative Example 15 | B-33(0.07%)+ HITENOL 330T (0.0105%)+ AG-E310(0.0035%) | 0.42 | 250.0 | 15 | 5 | 68 | 21.40 | 9.7 | 0 | 167 | 4.71 | 0.46 |

"PF value"

The PF value was calculated, using the formula shown in Math. 1, from the measured values of pressure loss and particle permeability. The target particle size was set to 0.10 to 0.15 μm. A higher PF value indicates that the air filter has a lower particle permeability of the target particle and a lower pressure loss.

[Math. 1]

$$\text{PF value} = \frac{\log_{10}(\text{Permeability of PAO[\%]}/100)}{\text{Pressure loss[Pa]}/9.81} \times (-100)$$

"Observation of the network"

The observation of the network was performed by observing the air-filter filter material by using a scanning electron microscope (abbreviated to a SEM, SU 8010, manufactured by Hitachi High-Technologies Corporation) at magnifications of 5000 to 10000 times. Before the observation, conductive coating was performed using ion sputtering (E-1045, manufactured by Hitachi High-Technologies Corporation) under the conditions of a discharge current of 15 mA, a sample-target distance of 30 mm, a degree of vacuum of 6 Pa, and a coating time of 2 minutes.

"Gurley stiffness measurement method"

Measurement was performed according to JAPAN TAPPI, *Kami Parupu Shiken Hōhō No. 40: 2000, Kami oyobi Itagami - Kajū Mage niyoru Kowasa Shiken Hōhō - Gārē Hō* (Paper and Pulp Test Method No. 40: 2000, Paper and Paperboard - Stiffness Test Method based on Load Bending - Gurley Method). The equipment used was a Gurley stiffness tester (manufactured by Kumagai Riki Kogyo Co., Ltd.).

"Tensile strength measuring method"

Measurement was performed according to JIS P 8113:2006, *Kami oyobi Itagami - Hippari Tokusei no Shiken Hōhō* (Paper and board - Determination of tensile properties). The equipment used was AUTOGRAPH AGX (manufactured by Shimadzu Corporation).

Examples 1 to 10 and Comparative Examples 2 to 11 confirmed that nanofiber of polyvinyl alcohol was formed and a mesh-like network of polyvinyl alcohol was present in pores serving as fluid permeation paths. The number average fiber diameter of the nanofiber was about 40 nm. In Comparative Examples 2 to 11, the amount of the mesh-like network of polyvinyl alcohol formed was small.

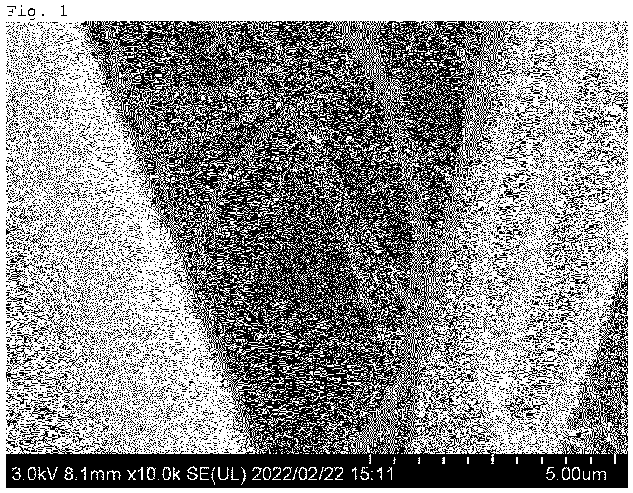

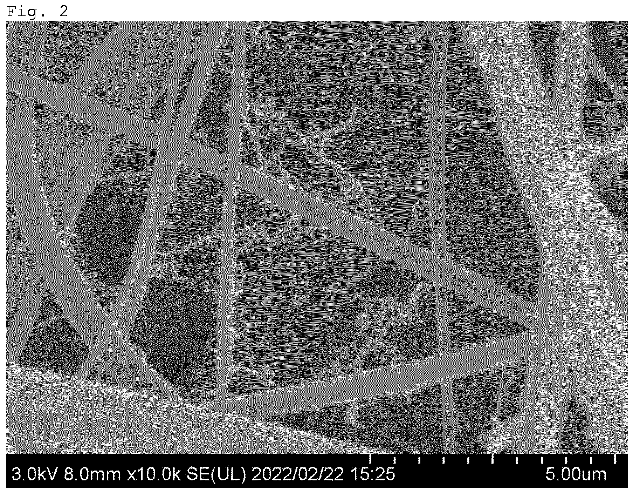

Fig. 1 shows a SEM observation image of the air filter of Example 8. Fig. 1 shows that a clean nanofiber network was formed and a suitable PF value was successfully obtained by drying polyvinyl alcohol, having a degree of saponification of 88 mol%, at a high rate and at a high temperature of 190°C. Fig. 2 shows a SEM observation image of the air filter of Example 9. Fig. 2 shows that a clean nanofiber network was formed and a suitable PF value was successfully obtained by drying polyvinyl alcohol, having a degree of saponification of 88 mol%, at a high rate and at a high temperature of 190°C.

All Examples 1 to 10 can be understood to show PF values each of which is higher than that of the support of Comparative Example 1. The air-filter filter material according to the present embodiment has a PF value of, for example, 11.0 or more under the condition of 0.10 to 0.15 μm. In the present Examples, the PF value was 11.3 or more under the condition of 0.10 to 0.15 μm.

In Comparative Example 12, since a slight amount of an acrylic-based resin was further added, as a binder resin, and then the polyvinyl alcohol aqueous solution (1% of the acrylic-based resin was added to PVA) was obtained, a mesh-like network of polyvinyl alcohol was not formed, and the PF value was almost equal to the PF value of Comparative Example 1 and was not improved.

In Comparative Example 13, since the drying temperature was lower than 140°C, the amount of drying was insufficient, and a mesh-like network was not neatly formed and the PF value was not increased either.

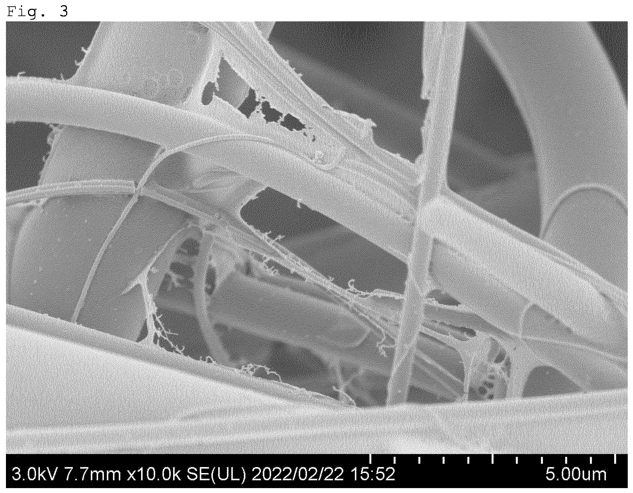

Comparative Examples 3 to 7 brought about high water repellency and low PF values, as compared with Comparative Example 2. That is, an example in which a surfactant is not blended and a water repellent is blended in the polyvinyl alcohol aqueous solution has a PF value lower than an example in which neither a cationic surfactant nor a water repellent is blended in the polyvinyl alcohol aqueous solution. Fig. 3 shows an image of the air filter of Comparative Example 4 observed with a SEM. Since a cationic surfactant is not added, a mesh-like network of polyvinyl alcohol is not formed. On the other hand, in Examples 1 to 10, in which both a cationic surfactant and a water repellent are blended in the polyvinyl alcohol aqueous solution, water repellency is obtained, and also a high PF value is obtained. Although the reason for this phenomenon is not clear, the Examples, in which polyvinyl alcohol, a cationic surfactant, and a water repellent are blended in the aqueous solution, were shown to be useful in that water repellency was obtained and high PF values were obtained.

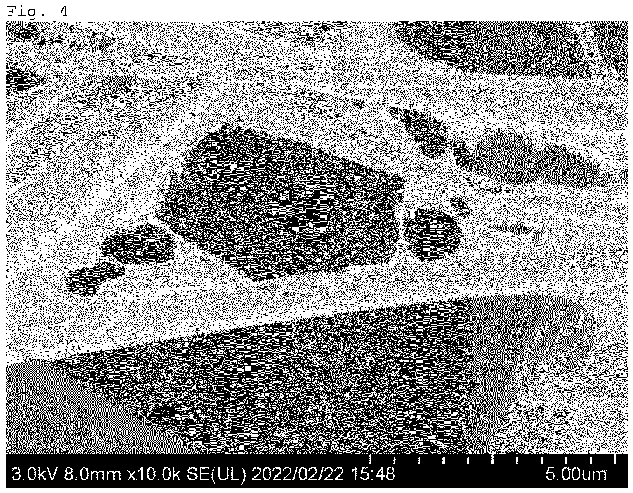

Also Comparative Examples 8 to 11 are examples in which a surfactant is not blended and a water repellent is blended in the polyvinyl alcohol aqueous solution. Fig. 4 shows an image of the air filter of Comparative Example 9 observed with a SEM. Since a cationic surfactant is not added, a mesh-like network of polyvinyl alcohol is not formed. The obtained PF values are not much different from those of Comparative Examples 3 to 7, and each of the PF values is lower than that of Comparative Example 2. Further, in spite of the fact that a non-fluorine-based water repellent is blended in the polyvinyl alcohol aqueous solution, water repellency is not obtained. Also by comparison between Comparative Examples 8 to 11 and Examples 1 to 10, the Examples were shown to be useful in that water repellency is obtained and high PF values are obtained. In Comparative Examples 8 and 10, water repellency is not exhibited. Both Comparative Example 9, in which a water repellent is added to Comparative Example 8, and Comparative Example 11, in which a water repellent is added to Comparative Example 10, do not exhibit water repellency in spite of the fact that a water repellent is added.

In Comparative Example 14, although a fluorine-based amphoteric surfactant is added to the polyvinyl alcohol aqueous solution, the PF value is almost equal to the PF value of Comparative Example 1, and only a PF value lower than the PF value of Comparative Example 2, in which a surfactant is not added, is obtained. This confirmed that addition of a cationic surfactant is more useful for obtaining a high PF value than addition of a fluorine-based amphoteric surfactant.

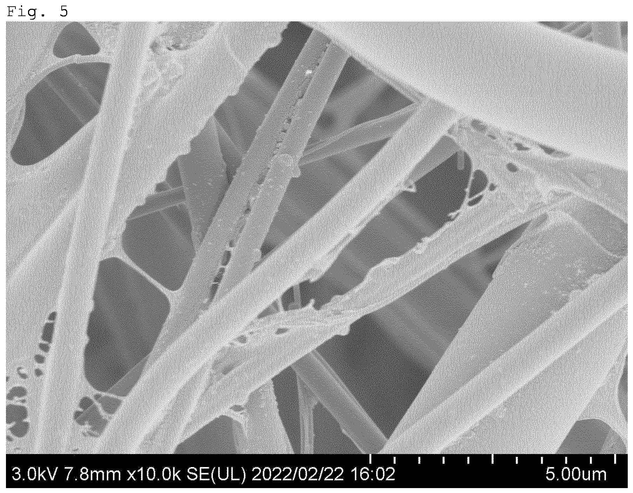

In Comparative Example 15, although an anionic surfactant is added, instead of a cationic surfactant, and then the polyvinyl alcohol aqueous solution was obtained, the PF value is lower than the PF value of Comparative Example 1, and is much lower than the PF value of Comparative Example 2, in which a surfactant is not added. This confirmed that addition of a cationic surfactant is more useful for obtaining a high PF value than addition of an anionic surfactant. Fig. 5 shows an image of the air filter of Comparative Example 15 observed with a SEM. Although an anionic surfactant is added, a mesh-like network of polyvinyl alcohol is not formed.

Although addition of a binder resin is usually performed as a method for enhancing the stiffness and the tensile strength of a filter, this causes a reduction in PF value. Therefore, the stiffness and the PF value have usually been in a trade-off relationship. According to the present invention, as shown in Tables 1 and 2, stiffness and tensile strength can be improved without greatly reducing the PF value. For example, Examples 1 to 10 bring about increase of 1 mN or more in Gurley stiffness and increase of 0.2 kN/m or more in tensile strength as compared with Comparative Example 1. When stiffness and tensile strength are improvements over Comparative Example 1, a situation where the filter is deformed during air passage after pleating and structural pressure loss is increased can be controlled. For example, the filter can be prevented from being exhausted and deformed over time with use.

The above results confirm that the method for producing an air-filter filter material according to the present embodiment can provide a method for producing, in a relatively short time, an air-filter filter material in which polyvinyl alcohol, a cationic surfactant, and a water repellent are used, and filter performance, particularly particle collection performance, is improved and good water repellency is obtained.

**Claims**

1. A method for producing an air-filter filter material, the method comprising:

   an adhesion step of adhering a polyvinyl alcohol aqueous solution to a support, having fluid permeability, and bringing the support into a wet state; and
   a drying step of drying the polyvinyl alcohol aqueous solution adhered to the support in a wet state at 140°C or higher,
   wherein the polyvinyl alcohol aqueous solution contains a cationic surfactant and a water repellent and is free of binder resins other than polyvinyl alcohol, and
   pores, serving as fluid permeation paths, of the support is, by the polyvinyl alcohol aqueous solution being dried after completion of the drying step, equipped with a mesh-like network of polyvinyl alcohol.

2. The method for producing the air-filter filter material according to claim 1, wherein the mesh-like network is formed of nanofiber.

3. The method for producing the air-filter filter material according to claim 2, wherein the nanofiber is nanofiber having a number average fiber diameter of 10 to 500 nm.

4. The method for producing the air-filter filter material according to any one of claims 1 to 3, wherein an amount of the polyvinyl alcohol aqueous solution for being adhered to the support is 50 g or more per square meter of support.

5. The method for producing the air-filter filter material according to any one of claims 1 to 4, wherein in the drying step, an evaporation rate of a solvent of the polyvinyl alcohol aqueous solution adhered to the support in the wet state is 100 g/min or more per square meter of support.

6. The method for producing the air-filter filter material according to any one of claims 1 to 5, wherein the polyvinyl alcohol aqueous solution is obtained via adding 1 to 30 parts by mass of the cationic surfactant per hundred parts by mass of polyvinyl alcohol.

7. The method for producing the air-filter filter material according to any one of claims 1 to 6, wherein the polyvinyl alcohol aqueous solution is obtained via adding 5 to 50 parts by mass of the water repellent per hundred parts by mass of polyvinyl alcohol.

8. The method for producing the air-filter filter material according to any one of claims 1 to 7, wherein a total amount of the polyvinyl alcohol, the cationic surfactant, and the water repellent adhered to the support after completion of the drying step is 0.05 to 1.50 mass%.

9. The method for producing the air-filter filter material according to any one of claims 1 to 8, wherein the support is a nonwoven fabric for filter material containing glass fiber as a main component.

10. An air-filter filter material comprising:

a support having fluid permeability; and
a mesh-like network of polyvinyl alcohol formed in pores serving as fluid permeation paths of the support,
wherein the mesh-like network is formed of nanofiber,
has a degree of polymerization of the polyvinyl alcohol of 1500 to 6000,
a degree of saponification of the polyvinyl alcohol of 60 to 90 mol%, and
an amount of polyvinyl alcohol, adhered to the support, of 0.05 to 1.00 mass%,
contains a cationic surfactant and a water repellent, and
is free of binder resins other than the polyvinyl alcohol.

Fig. 1

3.0kV 8.1mm x10.0k SE(UL) 2022/02/22 15:11                    5.00um

Fig. 2

3.0kV 8.0mm x10.0k SE(UL) 2022/02/22 15:25                    5.00um

Fig. 3

3.0kV 7.7mm x10.0k SE(UL) 2022/02/22 15:52      5.00um

Fig. 4

3.0kV 8.0mm x10.0k SE(UL) 2022/02/22 15:48        5.00um

Fig. 5

3.0kV 7.8mm x10.0k SE(UL) 2022/02/22 16:02          5.00um

### INTERNATIONAL SEARCH REPORT

| International application No. |
| --- |
| **PCT/JP2022/012608** |

**A.    CLASSIFICATION OF SUBJECT MATTER**

*B01D 39/00*(2006.01)i; *B01D 39/16*(2006.01)i; *B01D 39/20*(2006.01)i; *C08J 9/40*(2006.01)i
FI:    B01D39/00 B; B01D39/20 B; B01D39/16 Z; C08J9/40

According to International Patent Classification (IPC) or to both national classification and IPC

**B.    FIELDS SEARCHED**

Minimum documentation searched (classification system followed by classification symbols)

B01D39/00-41/14; C08J9/00-9/42; B01D46/00-46/90; D06M13/00-15/715

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| Y | JP 2010-094580 A (HOKUETSU KISHU PAPER CO LTD) 30 April 2010 (2010-04-30) paragraphs [0020]-[0021], [0028], [0033]-[0037], [0046], [0049]-[0051], [0089] | 1-10 |
| Y | JP 2008-194584 A (HOKUETSU PAPER MILLS LTD) 28 August 2008 (2008-08-28) claims 1, 4, paragraph [0028] | 1-10 |
| A | JP 2017-042762 A (HOKUETSU KISHU PAPER CO LTD) 02 March 2017 (2017-03-02) entire text | 1-10 |

☐ Further documents are listed in the continuation of Box C.          ☑ See patent family annex.

| | |
| --- | --- |
| *    Special categories of cited documents: | "T"    later document published after the international filing date or priority date and not in conflict with the application but cited to understand the principle or theory underlying the invention |
| "A"    document defining the general state of the art which is not considered to be of particular relevance | |
| "E"    earlier application or patent but published on or after the international filing date | "X"    document of particular relevance; the claimed invention cannot be considered novel or cannot be considered to involve an inventive step when the document is taken alone |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | "&"    document member of the same patent family |
| "P"    document published prior to the international filing date but later than the priority date claimed | |

| Date of the actual completion of the international search | Date of mailing of the international search report |
| --- | --- |
| **25 March 2022** | **17 May 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

| INTERNATIONAL SEARCH REPORT | International application No. |
| --- | --- |
| Information on patent family members | **PCT/JP2022/012608** |

| Patent document<br>cited in search report | Publication date<br>(day/month/year) | Patent family member(s) | Publication date<br>(day/month/year) |
| --- | --- | --- | --- |
| JP 2010-094580 A | 30 April 2010 | (Family: none) | |
| JP 2008-194584 A | 28 August 2008 | (Family: none) | |
| JP 2017-042762 A | 02 March 2017 | (Family: none) | |

Form PCT/ISA/210 (patent family annex) (January 2015)

**REFERENCES CITED IN THE DESCRIPTION**

**Patent documents cited in the description**

- JP 2008194584 A
- WO 2018221063 A1